Europäisches Patentamt

European Patent Office

Office européen des brevets

(11) Veröffentlichungsnummer: **0 232 832**
**B1**

(12) EUROPÄISCHE PATENTSCHRIFT

(45) Veröffentlichungstag der Patentschrifft:
21.03.90

(21) Anmeldenummer: **87101428.8**

(22) Anmeldetag: **03.02.87**

(51) Int. Cl. ⁵ : **B 62 D 27/06**

(54) Wagenkastengerippe.

(30) Priorität: 06.02.86 DE 3603707

(43) Veröffentlichungstag der Anmeldung:
19.08.87 Patentblatt 87/34

(45) Bekanntmachung des Hinweises auf die Patenterteilung:
21.03.90 Patentblatt 90/12

㊽ Bennante Vertragsstaaten:
**AT DE FR GB NL**

(56) Entgegenhaltungen:
**DE-A-2 751 753**
**DE-A-3 446 734**
**DE-U-8 326 978**

(73) Patentinhaber: **Iveco Magirus Aktiengesellschaft**
**Schillerstrasse 2 Postfach 27 40**
**D-7900 Ulm/Donau (DE)**

(72) Erfinder: **Arlt, Andreas, Dipl.-Ing. (FH)**
**Hans-Acker-Weg 1**
**D-7900 Ulm (DE)**
Erfinder: **Seidel, Wolfgang, Dipl.-Ing. (FH)**
**Eberhardtstrasse 46/3**
**D-7900 Ulm (DE)**

(74) Vertreter: **Socha, Peter**
**Iveco Magirus AG Postfach 2740 Schillerstrasse 2**
**D-7900 Ulm (DE)**

LIBERGRAF, STOCKHOLM 1990

## Beschreibung

Die Erfindung betrifft ein Gerippe für einen Wagenkasten, insbesondere für Nutzfahrzeuge wie beispielsweise Brandschutzfahrzeuge, mit über Zwischen- und/oder Eckverbindungsstücke miteinander verbundenen Profilstäben oder dergl., welche Längsnuten mit gegebenenfalls an beiden Seiten ihres Querschnitts vorgesehenen Hinterschneidungen nach Art einer Schwalbenschwanzführung aufweisen, in die ein Klemmstück eingesetzt ist, welches mit dem Zwischen- und/oder Eckverbindungsstück über einen Bolzen an der Schwalbenschwanzführung in einem Klemmschluß verschraubt werden kann.

Ein Wagenkastengerippe der vorgenannten bekannten Bauart wird beispielsweise gemäß DE-A-3 446 734.3 (Offenlegungstag: 03. 07. 86) vorgeschlagen. Hierbei kommt ausschließlich die kraftschlüssige Verbindung zum Tragen, d. h. eine eventuelle Spaltbildung an kritischen Stellen kann nicht ausreichend verhindert werden. Sobald Kräfte bzw. Schwingungen auftreten, die die erzeugte Klemmkraft überschreiten, erfolgt eine Bewegung zwischen den zwei Profilleisten, welche eine Spaltbildung zur Folge hat. Die Klemmkraft, die durch das Anzugsmoment der Schraube eingeleitet wird, erzeugt zwischen Klemmstück und Profilstab die sogenannte Reibungskraft. Diese wiederum hängt sowohl von der Größe der Fläche als auch von ihrer Beschaffenheit ab. Sollte zwischen Klemmstück und Profilstab an der Klemmfläche Öl, Fett oder ähnliches auftreten, wird die Klemmwirkung erheblich beeinträchtigt. Die gleiche Problematik ist gegeben beispielsweise nach der Wagenkastenkonstruktion gemäß DE-A-2 751 753, auch gemäß DE-U-8 326 978.9, selbst bei Vorhandensein einer Zahnungsausbildung auf dem Klemmstück, die sich an die Nutinnenwand gewissermaßen ankrallt und für einen zusätzliche mechanische Verbindung sorgt.

Aufgabe der Erfindung ist die Schaffung eines Gerippes für einen Wagenkasten der eingangs genannten Art, welches einfach aufgebaut ist und nicht nur eine konstruktiv einfache formschlüssige Verbindung zwischen den Profilstäben einrichtet, sondern bei der auch bei Überschreiten der Reibkräfte (reibschlüssige Verbindung) eine Spaltbildung an den gefährdeten Stellen verhindert wird.

Gelöst wird die der Erfindung zugrundeliegende Aufgabe dadurch, daß der Bolzen zusätzlich mit einer ausgerichteten Bohrung an einem Längssteg des Profilstabs formschlüssig verbunden ist.

Der Bolzen kann direkt in die Bohrung des Längsstegs des Profilstabs eingreifen oder aber alternativ über eine Buchse formschlüssig in der Bohrung aufgenommen sein.

In weiterer Ausgestaltung der Erfindung kann das Klemmstück selbst, das den Bolzen aufnimmt, einen integrierten Buchsen- oder Flanschabschnitt besitzen, der seinerseits formschlüssig in der Bohrung des Längsstegs aufgenommen ist.

Durch die Verwendung einfachster Teile, d. h. genormter Teile nach DIN und deren spezifische Anwendung wird mithin nicht nur eine formschlüssige Verbindung erreicht, welche sicher und einfach an jedem Eck- wie auch Zwischenverbindungsstück eingebracht werden kann, sondern dieses System ermöglicht es auch, unabhängig von auftretenden Winkeln, z. B. an Diagonalstreben, zusätzlich zu der reibschlüssigen Verbindung eine formschlüssige Verbindung einzubringen, um somit dem Profilsystem eine höhere Steifigkeit zu geben, wobei die hohe Flexibilität des Profilsystems nicht eingeschränkt wird.

Sowie die Profilleisten bzw. Profilstäbe in ihrer Position sind, wird unter Zuhilfenahme beispielsweise eines Eckverbindungsstücks eine Bohrung definierter Größe in die Profilleiste eingebracht. Die verwendete Schraube bzw. der verwendete Bolzen zur Erreichung der reibschlüssigen Verbindung zwischen Klemm- und Eckverbindungsstück ist in ihrer Länge so ausgeführt, daß bei Erreichen der maximalen Klemmkraft (maximales Anzugsmoment) der Schaft der Schraube bzw. des Bolzens derart in die Profilleiste eingreift, daß eine formschlüssige Verbindung entsteht. Hierdurch entsteht nicht nur eine große Steifigkeit des Profilsystems ohne Beeinträchtigung der Flexibilität, sondern es ist insbesondere auch eine einfache und sichere Montage an jeder möglichen Stelle des Profilsystems möglich.

In besonders bevorzugter Weiterbildung der Erfindung ist vorgesehen, daß ein Querbolzen vorgesehen ist, der an beiden Axialenden direkt oder über Buchsen in Bohrungen der Längsstege eines Profilstabs aufgenommen ist und eine mittige Durchgangsbohrung quer zur Bolzenachse besitzt, die das eine Ende einer langschaftigen unter Vorspannung gehaltenen Spannschraube fest aufnimmt, dessen anderes Ende mit einem weiteren Klemmstück verschraubt ist, das in einem benachbarten Profilstab aufgenommen ist.

Vorteilhaft ist das weitere Klemmstück als vergleichsweise lange Klemmleiste ausgebildet, und es ist eine mittige Gewindebohrung für die Spannschraube in der Klemmleiste vorgesehen.

Durch die vorgenannte weitere Systemvariante wird es ermöglicht, nach Erreichen der genannten Vorteile, Reib- und Formschlüssigkeit, zusätzlich eine Vorspannung zwischen den einzelnen Profilstäben oder -leisten zu erreichen.

Dieses System ermöglicht es, bei nachträglicher Einbringung aufgetretene Spalte wieder so zu verringern, daß die Profilstäbe wieder exakt aufeinanderliegen.

In die Profilleiste wird mithin eine Querbohrung derart eingebracht, daß ein Bolzen eingeschoben werden kann, welcher mit einer Bohrung für die Spannschraube versehen ist, mittels derer die Profilleisten formschlüssig unter Vorspannung verbunden werden.

Die Erfindung wird nachfolgend anhand von Ausführungsbeispielen unter Bezugnahme auf die beigefügte Zeichnung näher erläutert;

es zeigen:

Fig. 1 einen Längsschnitt durch einen Teil eines Profilstabes im Bereich eines Eckverbindungsstücks,

Fig. 2 einen Querschnitt durch den Profilstab längs der Linie A - A der Fig. 1,

Fig. 3 das Klemmstück gemäß Fig. 2 in größerer Einzelheit,

Fig. 4 das Klemmstück der Fig. 2 und 3 in einer Draufsicht,

Fig. 5 ein der Fig. 1 entsprechender Längsschnitt mit einer anderen Verbindungsvariante,

Fig. 6 die Ausführung nach Fig. 5 im Schnitt längs der Linie B - B,

Fig. 7 das Klemmstück der Fig. 5 und 6 in größerer Einzelheit ähnlich der Fig. 3,

Fig. 8 das Klemmstück gemäß Fig. 7 in einer Draufsicht,

Fig. 9 die Verbindung zweier senkrecht zueinander angeordneter Profilstäbe in perspektivischer Ansicht mit einer zusätzlichen Verbindungsvariante, und

Fig.10 die Verbindungsvariante nach Fig. 9 im Querschnitt.

Ein nicht näher dargestellter Fahrzeugaufbau weist ein Gerippe (1) oder ein Gestell auf, welches im wesentlichen aus vertikal und horizontal angeordneten Profilstäben (3) besteht.

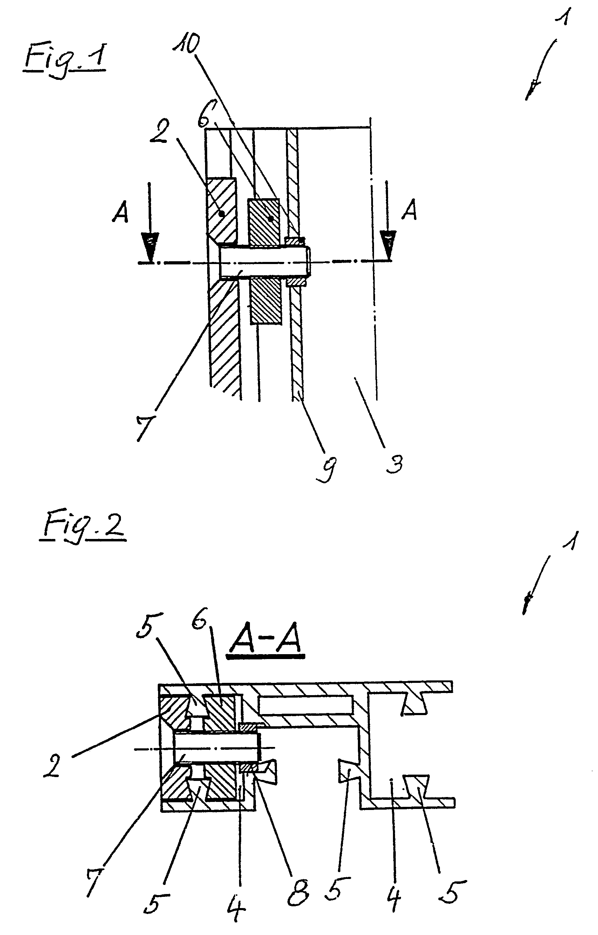

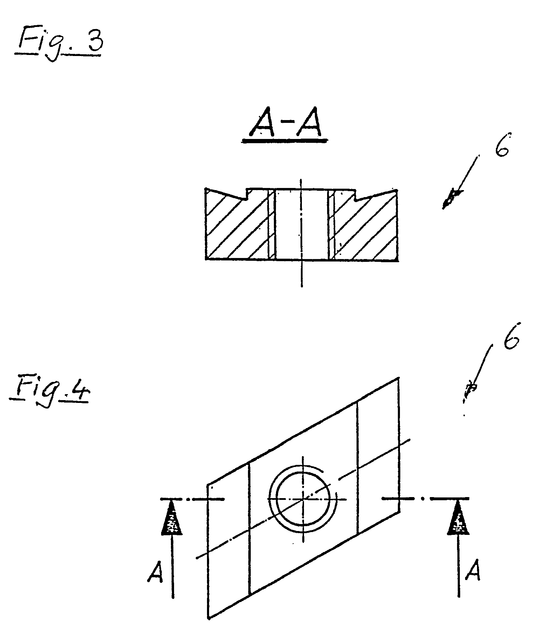

Gemäß Fig. 2 weist der Profilstab (3) zumindest eine Schwalbenschwanzführung (5) auf, welche durch Längsnuten (4) mit Hinterschneidungen gebildet ist. Hinter der Hinterschneidung bzw. der Schwalbenschwanzführung (5) befindet sich als Gegenstück zum Eckverbindungsstück (2) auf der Längsnutaußenseite ein Klemmstück (6), welches in größerer Einzelheit in den Fig. 3 und 4 gezeigt ist. Das Klemmstück (6) ist über einen Bolzen (7) mit dem Eckverbindungsstück (2) verschraubt und befindet sich mithin bezüglich der Schwalbenschwanzführung (5) in einem festen Klemmschluß (kraftschlüssige Verbindung).

Sowie die Profilstäbe (3) in ihrer Position sind, wird unter Zuhilfenahme des zugehörigen Eckverbindungsstücks (2) eine Bohrung (8) definierter Größe an entsprechender Stelle im Längssteg (9) des Profilstabs (3) eingebracht. Der verwendete Bolzen (8) zur Erreichung der reibschlüssigen Verbindung zwischen Klemmstück (6) und Eckverbindungsstück (2) ist in seiner Länge so ausgeführt, daß bei Erreichen der maximalen Klemmkraft (maximales Anzugsmoment) der Schaft der Bolzenverschraubung derart in den Längssteg (9) des Profilstabs (2) eingreift, daß zusätzlich eine formschlüssige Verbindung erreicht wird. Dadurch wird an gefährdeten Verbindungsstellen zuverlässig eine Spaltbildung zwischen den zugehörigen Profilstäben (3) verhindert und gleichzeitig eine Erhöhung der Steifigkeit des Profilsystems insgesamt erreicht, ohne jedoch die große Flexibilität zu beeinträchtigen. Auch ist eine einfache und sichere Montage an jeder beliebigen Stelle des Profilsystems möglich.

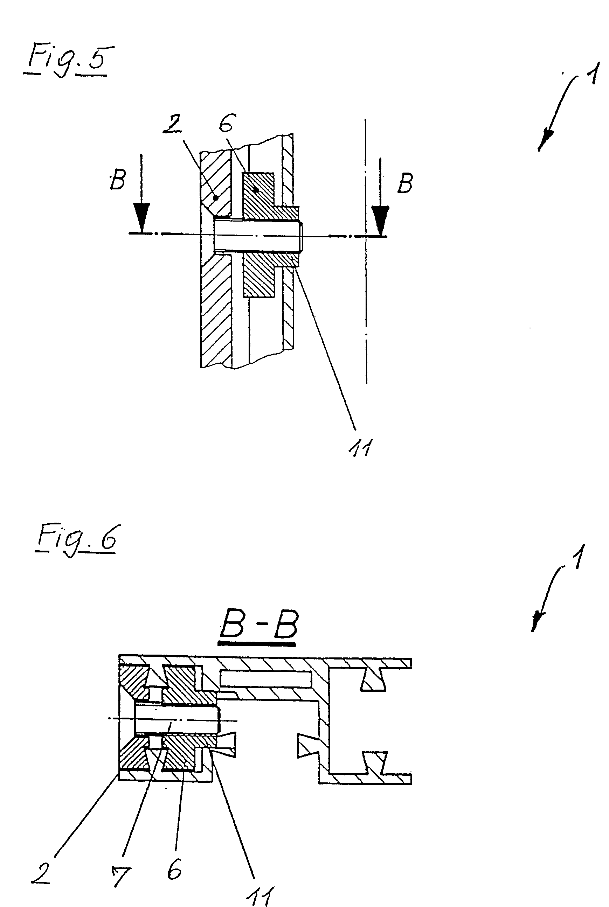

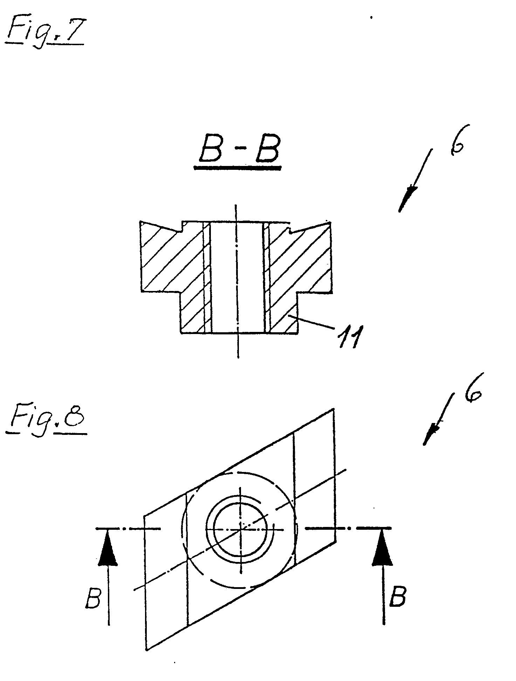

Die Ausführungsvariante nach den Fig. 5 bis 8 unterscheidet sich von derjenigen nach den Fig. 1 bis 5 dadurch, daß der Bolzen (7) nicht über eine separate Buchse (10) mit der Bohrung (8) des Längsstegs (9) formschlüssig verbunden ist, sondern über einen integrierten Buchsenoder Flanschabschnitt (11) des Klemmstücks (6) selbst. Dadurch ergeben sich verbesserte Zentrierungs- und Ausrichtverhältnisse des Klemmstücks mit vergrößerter Verschraubungslänge des Bolzens (7) im Klemmstück.

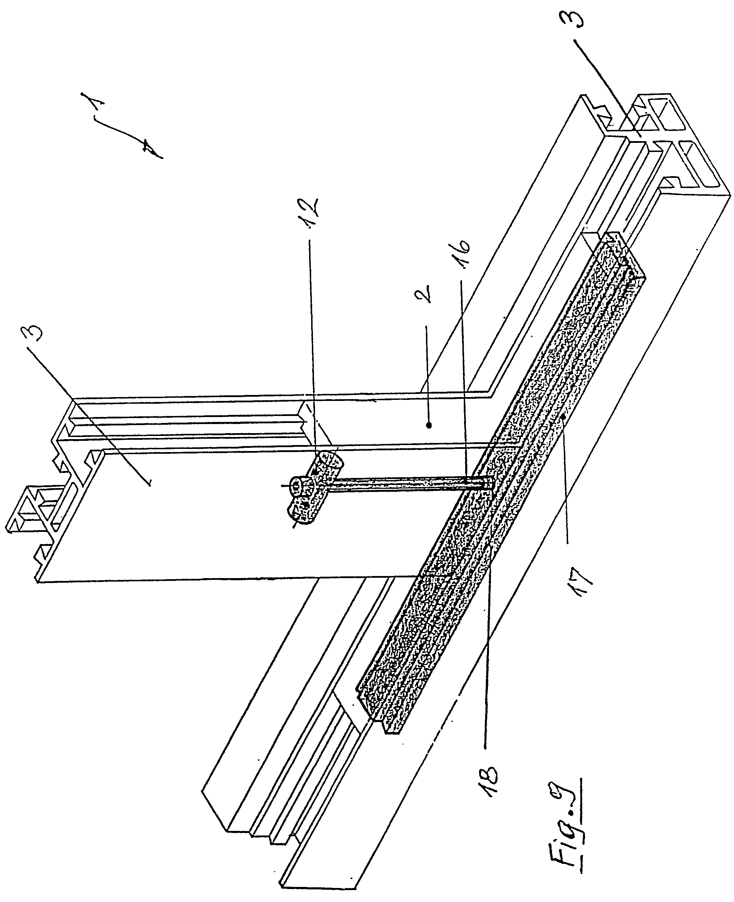

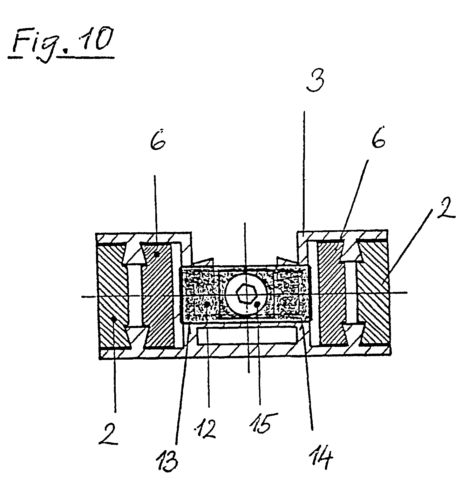

Gemäß den Fig. 9 und 10 werden zwei senkrecht zueinander angeordnete Profilstäbe (3) nicht nur über zugehörige Eckverbindungsstücke (2) und Klemmstücke in den Längsnuten (4) der Profilstäbe (3) nach der vorgenannten Weise reib- und formschlüssig verbunden, sondern es wird zusätzlich eine Vorspannung zwischen den beiden Profilstäben (3) erreicht. Dieses System ermöglicht es, bei nachträglicher Einbringung aufgetretene Spalte wieder so zu verringern, daß die Profilstäbe (3) wieder exakt aufeinanderliegen. Insbesondere werden in den in Fig. 9 senkrechten Profilstab (3) zwei weitere Bohrungen (13 und 14) in den Längsstegen (9) eingebracht, so daß ein weiterer Querbolzen (12) eingeschoben werden kann, welcher mit einer Durchgangsbohrung (15) für eine zentrale Spannschraube (16) versehen ist. Mittels dieser Spannschraube (16), an deren Ende sich ein langgestrecktes Klemmstück (17) in Form einer Klemmleiste befindet, werden die beiden Profilstäbe (3) zusätzlich formschlüssig unter Vorspannung verbunden. Die Spannschraube (16) ist in einer mittigen Gewindebohrung (18) des langgestreckten Klemmstücks (17) verschraubt, wobei das Klemmstück (17) an anderer Stelle auch zur Verschraubung des Eckverbindungsstücks (2) in dem in Fig. 9 unteren Profilstab (3) dient.

## Patentansprüche

1. Gerippe (1) für Wagenkasten, insbesondere für Nutzfahrzeuge wie beispielsweise Brandschutzfahrzeuge, mit über Zwischen- und/oder Eckverbindungsstücke (2) miteinander verbundenen Profilstäben (3) oder dergl., welche Längsnuten (4) mit gegebenenfalls an beiden Seiten ihres Querschnitts vorgesehenen Hinterschneidungen nach Art einer Schwalbenschwanzführung (5) aufweisen, in die ein Klemmstück (6) eingesetzt ist, welches mit dem Zwischen- und/oder Eckverbindungsstück (2) über einen Bolzen (7) an der Schwalbenschwanzführung (5) in einem Klemmschluß verschraubt werden kann, dadurch gekennzeichnet, daß der Bolzen (7) zusätzlich mit einer ausgerichteten Bohrung (8) an einem Längssteg (9) des Profilstabs (3) formschlüssig verbunden ist.

2. Gerippe nach Anspruch 1, dadurch gekennzeichnet, daß der Bolzen (7) direkt in die Bohrung (8) des Längsstegs (9) eingreift.

3. Gerippe nach Anspruch 1, dadurch gekennzeichnet, daß der Bolzen (7) über eine Buchse (10) in der Bohrung (8) des Längsstegs (9) formschlüssig aufgenommen ist.

4. Gerippe nach Anspruch 1, dadurch gekennzeichnet, daß das Klemmstück (6) einen integrierten Buchsen- oder Flanschabschnitt (11) aufweist, der seinerseits in der Bohrung (8) des Längsstegs (9) aufgenommen ist.

5. Gerippe nach einem der Ansprüche 1 bis 4, dadurch gekennzeichnet, daß die Bohrung (7) nach Zusammensetzung der zugehörigen Profilstäbe (3) und Verbindungsstücke (2) gefertigt ist.

6. Gerippe nach einem der Ansprüche 1 bis 5, dadurch gekennzeichnet, daß ein Querbolzen (12) vorgesehen ist, der an beiden Axialenden direkt oder über Buchsen in Bohrungen (13, 14) der Längsstege (9) eines Profilstabs (3) aufgenommen ist und eine mittige Durchgangsbohrung (15) quer zur Bolzenachse besitzt, die das eine Ende einer langschaftigen unter Vorspannung gehaltenen Spannschraube (16) fest aufnimmt, dessen anderes Ende mit einem weiteren Klemmstück (17) verschraubt ist, das in einem benachbarten Profilstab (3) aufgenommen ist.

7. Gerippe nach Anspruch 6, dadurch gekennzeichnet, daß das weitere Klemmstück (17) als vergleichsweise lange Klemmleiste ausgebildet und eine mittige Gewindebohrung (18) für die Spannschraube (16) vorgesehen ist.

## Claims

1. A frame (1) for vehicle bodies, in particular for commercial vehicles such as for example fire protection vehicles, with sectional bars (3) or the like which are connected with each other by means of intermediate- and/or corner connecting pieces (2) and which have longitudinal grooves (4) with undercuts provided, if required, on both sides of its cross-section in the manner of a dovetail guide (5), into which a shim (6) is inserted which can be screwed with the intermediate- and/or corner connecting piece (2) by means of a pin (7) on the dovetail guide (5) in a clamping closure, characterised in that the pin (7) is additionally connected in a form-locking manner with an aligned bore (8) on a longitudinal cross-piece (9) of the sectional bar (3).

2. A frame according to claim 1, characterised in that the pin (7) engages directly into the bore (8) of the longitudinal cross-piece (9).

3. A frame according to claim 1, characterised in that the pin (7) is received in a form-locking manner by means of a bush (10) in the bore (8) of the longitudinal cross-piece (9).

4. A frame according to claim 1, characterised in that the shim (6) has an integrated bush- or flange- section (11) which, in turn, is received in the bore (8) of the longitudinal cross-piece (9).

5. A frame according to one of claims 1 to 4, characterised in that the bore (7) is finished after construction of the associated sectional bars (3) and connecting pieces (2).

6. A frame according to one of claims 1 to 5, characterised in that a transverse pin (12) is provided which is received at both axial ends directly or by means of bushes in bores (13, 14) of the longitudinal cross-pieces (9) of a sectional bar (3) and has a central through-bore (15) transversely to the pin axis which firmly receives one end of a long-shafted tightening screw (16) held under prestressing, the other end of which is screwed with a further shim (17) which is received in an adjacent sectional bar (3).

7. A frame according to claim 6, characterised in that the further shim (17) is constructed as a comparatively long clamping strip and a central threaded bore (18) is provided for the tightening screw (16).

## Revendications

1. Carcasse (1) pour carrosserie, notamment pour des véhicules utilitaires, tels que par exemple, des véhicules de lutte contre l'incendie, avec des barres profilées (3) ou similaires reliées entre elles au moyen d'éléments de jonction intercalaires et/ou d'assemblage d'angles (2), qui présentent des rainures longitudinales (4) avec, le cas échéant, des contre-dépouilles à la façon d'une glissière à queue d'aronde (5) sur les deux côtés de leur section, dans lesquelles est inséré un élément de serrage (6) qui peut être fixé par vissage contre la glissière à queue d'aronde avec l'élément de jonction intercalaire et/ou d'assemblage angulaire (2) par l'intermédiaire d'un goujon, en constituant ainsi une liaison par serrage, caractérisée en ce que le goujon (7) est, de plus, relié par encastrement de forme à un perçage aligné sur lui (8) dans une traverse longitudinale (9) de la barre profilée (3).

2. Carcasse selon la revendication 1, caractérisée en ce que le goujon (7) est directement en contact avec le perçage (8) de la traverse longitudinale (9).

3. Carcasse selon la revendication 1, caractérisée en ce que le goujon (7) est maintenu par encastrement de forme au moyen d'une douille (10) dans le perçage (8) de la traverse longitudinale (9).

4. Carcasse selon la revendication 1, caractérisée en ce que l'élément de serrage (6) présente une partie intégrée formant douille ou collet (11), qui est logée pour sa part dans le perçage (8) de la traverse longitudinale (9).

5. Carcasse selon l'une des revendications 1 à 4, caractérisée en ce que le perçage (7) est réalisé après l'assemblage des barres profilées (3) et des éléments de raccordement (2) considérés.

6. Carcasse selon l'une des revendications 1 à 5, caractérisée en ce qu'il est prévu un goujon transversal (12) qui est engagé par ses deux extrémités axiales, directement ou au moyen de douilles, dans des perçages (13, 14) des traverses longitudinales (9) d'une barre profilée (3) et comporte un perçage de passage (15) central perpendiculaire à l'axe du goujon, qui assure un logement fixe à une des extrémités d'une vis de tension à longue tige (16) maintenue sous précontrainte, dont l'autre extrémité est vissée dans un autre élément de serrage (17) inséré dans une barre profilée (3) voisine.

7. Carcasse selon la revendication 6, caractérisée en ce que l'autre élément de serrage (17) est constitué par un bandeau de serrage relativement long et en ce qu'il est prévu un alésage fileté (18) central pour la vis de tension (16).

Fig.1

Fig.2

A-A

_Fig. 3_

$\underline{A-A}$

_Fig. 4_

Fig.5

Fig.6

B - B

Fig.7

B - B

6

11

Fig.8

6

B

B

Fig. 9

*Fig. 10*